# EUROPÄISCHE PATENTSCHRIFT

(11) **EP 2 328 991 B1**
(45) Veröffentlichungstag und Bekanntmachung des Hinweises auf die Patenterteilung: **13.04.2016**
(21) Anmeldenummer: 09778087.8
(22) Anmeldetag: 25.08.2009
(51) Int. Cl.: C09K 3/14

(54) **BESCHICHTETE FESTSTOFFPARTIKEL**
COATED SOLID PARTICLES
PARTICULES SOLIDES ENROBÉES

(30) Priorität: 25.08.2008 DE 102008039459
(43) Veröffentlichungstag der Anmeldung: 08.06.2011
(73) Patentinhaber: Center for Abrasives and Refractories Research & Development C.A.R.R.D. GmbH, 9524 Villach (AT)
(72) Erfinder: FUCHS, Thomas, 79730 Murg (DE)
(74) Vertreter: Haseltine Lake LLP
(86) Internationale Anmeldenummer: PCT/EP2009/006142
(87) Internationale Veröffentlichungsnummer: WO 2010/025857

(56) Entgegenhaltungen:
- EP-A- 0 417 729
- EP-A- 0 861 217
- US-A- 5 250 085
- US-A- 5 516 348
- US-A1- 2008 172 951
- US-B1- 6 451 076

## Beschreibung

Die vorliegende Erfindung betrifft beschichtete Feststoffpartikel aus der Gruppe Korund, Schmelzkorund, Sinterkorund, Zirkonkorund, Siliziumcarbid, Borcarbid, kubisches Bornitrid, Diamant und/oder Gemische davon, die eine Oberflächenbehandlung in Form einer physikalisch aufgetragenen Beschichtung aufweisen.

Derartige Feststoffpartikel werden beispielsweise als Schleifkörner in den unterschiedlichsten Korngrößen in gebundener und loser Form für Schleifprozesse eingesetzt, mit denen sämtliche bekannten Werkstoffe bearbeitet werden können. Generell unterscheidet man bei der Verwendung von Schleifkörnern zwischen den sogenannten gebundenen Schleifmitteln, worunter man Schleifscheiben, Schleifsteine oder auch Schleifstifte versteht, bei denen die Schleifkörner mit einer keramischen Masse oder einem Kunstharz zu dem entsprechenden Schleifkörper geformt werden und anschließend durch eine Wärmebehandlung verfestigt werden, sowie den Schleifmitteln auf Unterlage bzw. den flexiblen Schleifmitteln, bei denen die Schleifkörner mit Hilfe eines Binders (meist Kunstharz) auf einer Unterlage (Papier oder Leinen) fixiert werden, um auf diese Weise Schleifpapier oder Schleifbänder zu erhalten.

Bei der Herstellung von Schleifmitteln auf Unterlage erfolgt das Aufbringen der Schleifkörner auf die Unterlage, wie z. B. Papier oder Bänder, heute üblicherweise in sogenannten Streuanlagen, wobei die Schleifkörner möglichst homogen verteilt auf ein Förderband aufgebracht werden, das die Schleifkörner in ein elektrostatisches Feld transportiert, das dadurch ausgebildet wird, dass zwischen zwei Elektroden, die in einem bestimmten Abstand voneinander angeordnet sind, eine Gleichspannung angelegt wird. Gleichzeitig läuft in dem elektrostatischen Feld oberhalb des Transportbandes mit den Schleifkörner in Gegenrichtung, in einem bestimmten Abstand und parallel zum Transportband eine beleimte Unterlage über Rollen, so dass die beschichtete Seite in Richtung Transportband zeigt. Im elektrostatischen Feld werden nun die Schleifkörner, die lose auf dem Transportband liegen, angeregt und in Richtung der Gegenelektrode beschleunigt, so dass sie gegen die beleimte Unterlage, die vor der Gegenelektrode angeordnet ist, springen und dort festkleben. Dabei wird angestrebt, ein möglichst dicht und gleichmäßig belegtes Schleifband oder Schleifpapier zu erhalten.

Häufig tritt bei diesen Herstellverfahren das Problem auf, dass die Schleifkörner anschließend ungleichmäßig auf der Unterlage verteilt sind, oder dass die Streudichte zu gering ist. Man kann diese Probleme teilweise dadurch lösen, dass man die Spannung erhöht oder auch den Abstand zwischen Transportband und geleimter Unterlage bzw. den Abstand zwischen den Elektroden verändert. Dies bedeutet jedoch immer nur eine temporäre Lösung, da die äußeren Bedingungen, wie z.B. Luftfeuchtigkeit, einen großen Einfluss auf das Streuverhalten der Schleifkörner haben. Zwar gelingt es, in einer Streuanlage in einem gewissen Rahmen ein konstantes Klima einzustellen, jedoch ist es meist aus produktionstechnischen Gründen nicht möglich, auch die Schleifkörner, die in der Regel in Papiersäcken unter klimatisch vollkommen anderen Bedingungen über einen längeren Zeitraum transportiert und gelagert wurden, in einer vertretbaren Zeit vollständig dem Klima anzupassen.

In diesem Zusammenhang hat man auch festgestellt, dass insbesondere die Oberflächenleitfähigkeit des Schleifkorns einen Einfluss auf die Verarbeitbarkeit des Schleifkorns im elektrostatischen Feld hat und dass es günstig ist, wenn auf der Oberfläche des Schleifkorns Wasser angelagert ist, wodurch die. Oberflächenleitfähigkeit verbessert wird. So wird in der EP 0 304 616 B1 ein oberflächenbehandeltes Schleifkorn auf Basis von Aluminiumoxid beschrieben, das mit einer hygroskopischen und/oder hydrophilen Substanz beschichtet ist, wodurch auf der Oberfläche des Schleifkorns ein permanenter Feuchtigkeitsfilm ausgebildet werden soll, der für eine ausreichende Oberflächenleitfähigkeit sorgt und ein homogenes Verarbeiten im elektrostatischen Feld zulässt.

In der EP 0 856 037 B1 werden Schleifkörner beschrieben auf Basis von Aluminiumoxid, die auf ihrer Oberfläche eine Ummantelung aufweisen, die im Wesentlicher aus einem Tonerdehydrat und einem Natriumsilikat besteht. Auch in diesem Fall erhält man ein Schleifkorn, dessen Verarbeitbarkeit im elektrostatischen Feld weitgehend unabhängig von den jeweiligen zeit- und ortsgebundenen klimatischen Verhältnissen (Luftfeuchtigkeit) ist.

Die Oberflächenbehandlung von Schleifkörnern zur Verbesserung der Streufähigkeit birgt jedoch die Gefahr, dass sich zu viel Feuchtigkeit an der Oberfläche des Schleifkorns anlagert und beispielsweise die Fließfähigkeit der Schleifkörnung verschlechtert wird, wodurch eine ideal homogene Verteilung der Schleifkörner auf dem Transportband verhindert wird. Eine unregelmäßige Verteilung auf dem Transportband führt jedoch automatisch zu einer ungleichmäßigen Verteilung auf dem Schleifband und damit zu einer Produktverschlechterung. Auch kann sich ein zu hoher Feuchtigkeitsgehalt negativ auf die Einbindung des Schleifkorns in der Kunstharzmatrix auswirken.

In der Vergangenheit hat man daher versucht, die Oberflächenbehandlung von Schleifkörnern zur Verbesserung der Streufähigkeit soweit zu minimieren, dass die Fließfähigkeit der Schleifkörner oder deren Einbindung in der Kunstharzmatrix nicht unter einer zu starken Behandlung leidet. Probleme mit der Anregbarkeit des Schleifkorns im elektrostatischen Feld hat man notfalls dadurch behoben, dass man die Feldbedingungen (Abstand, Spannung) verändert hat.

Ein weiteres Problem beim elektrostatischen Streuen von Schleifkörnern, insbesondere bei der Herstellung von Schleifbändern, besteht in der Staubentwicklung beim Einfüllen der Schleifkörnungen in die Streuanlage. Hierbei werden üblicherweise die Schleifkörnungen aus 25 kg Säcken in einen offenen Trichter geschüttet, wobei der an den Schleifkörnern anhaftende Staub als Staubwolke über dem Trichter aufsteigt, was mit einer enormen gesundheitlichen Belastung der in der Anlage tätigen Mitarbeiter verbunden ist. Die Versuche zur Lösung dieses Problems durch das Installieren von Absauganlagen im Bereich der Trichteröffnung waren nicht sonderlich erfolgreich, da für eine effiziente Staubabsaugung die Absauganlage relativ nah an der Trichteröffnung positioniert sein muss, was dann zu Behinderungen beim Befüllen des Trichters führt.

Auch die Ausrüstung des Personals mit entsprechenden Schutzvorrichtungen, wie z. B. Mundschutz, Staubmaske etc., führt nur teilweise zum Erfolg, da die am Schleifkorn anhaftenden Staubmengen in der Regel relativ groß sind, so dass ein vollkommener Schutz schwierig ist. Hinzu kommt, dass derartige Schutzmaßnahmen eine zusätzliche Erschwernis der Tätigkeit mit sich bringen und daher unerwünscht sind.

Der am Schleifkorn anhaftende Staub rührt von der Zerkleinerung des Schleifkorns bei dessen Produktion her. Dabei entstehen große Mengen an Feinststaub, die zwar zum größten Teil abgesaugt werden, wobei jedoch noch immer relativ große Mengen am Schleifkorn haften bleiben und dann später beispielsweise beim Entleeren der Schleifkornsäcke freigesetzt werden.

Es besteht somit weiterhin das Problem, Schleifkörner zu erhalten, die einerseits ein ideales Streuverhalten im elektrostatischen Feld und eine optimale Einbindung in einer Künstharzmatrix zeigen und andererseits keine Belastung des Personals in der Streuanlage durch Staub verursachen.

Darüber hinaus wird gefordert, dass keine zu aufwändige Zusatzbehandlung erforderlich ist, um dieses Ziel zu erreichen, da es sich bei Schleifkörnern um Massenprodukte handelt, die kostengünstig produziert werden müssen. Somit scheidet beispielsweise selbst ein einfaches zusätzliches Waschen der Schleifkörner zur Staubbeseitigung und ein anschließendes Trocknen als Mittel der Wahl aus, da diese Manipulationen mit relativ viel Zeit- und Personalaufwand verbunden sind, wodurch die Herstellkosten für die Schleifkörner spürbar belastet werden.

Gelöst wird das Problem durch Feststoffpartikel aus der Gruppe Korund, Schmelzkorund, Sinterkorund, Zirkonkorund, Siliziumcarbid, Borcarbid, kubisches Bornitrid, Diamant und/oder Gemische davon mit den Merkmalen des Anspruchs 1. Vorteilhafte Ausgestaltungen der vorliegenden Erfindung sind Gegenstand der Unteransprüche.

Gegenstand der vorliegenden Erfindung ist auch ein Verfahren zur Herstellung von oberflächenbehandelten Feststoffpartikeln sowie ihre Verwendung zur Herstellung von Schleifmitteln auf Unterlage sowie ihre Verwendung in verschleißfesten Oberflächenbeschichtungen.

Bei der Suche nach der Lösung des oben geschilderten Problems wurde gefunden, dass hervorragend geeignete Feststoffpartikel für die Verarbeitung im elektrostatischen Feld dadurch erhalten werden können, dass sie einer Oberflächenbehandlung in Form einer physikalisch aufgetragenen Beschichtung mit einer wässrigen Lösung eines Polyols unterzogen werden. Dabei genügen bereits geringe Mengen an Polyol und Behandlungen mit 0,001 bis maximal 1,0 Gewichtsprozent Polyol, bezogen auf die unbehandelten Feststoffpartikel, reichen aus, um einen optimalen Effekt zu erhalten. Bei bevorzugten Ausgestaltungen der vorliegenden Erfindung werden ca. 0,01 bis ca. 1,0 Gewichtsprozent Polyol, bezogen auf die unbehandelten Feststoffpartikel, eingesetzt.

Geeignete Polyole sind lineare Polyole mit zwei bis maximal 6 Kohlenstoffatomen. Besonders bevorzugte Polyole im Sinne der vorliegenden Erfindung sind kurzkettige Polyole, wie z.B. Glykol, Propandiol, Butandiol und Glycerin.

Die Oberflächenbehandlung ist denkbar einfach, wobei die Feststoffpartikel in einem Mischer vorgelegt werden und anschließend während des Mischens mit einer wässrigen Lösung mindestens eines Polyols besprüht werden. Dabei genügen bereits geringe Anteile an Polyol in der wässrigen Lösung, um eine Wirkung zu erzielen, so dass das bevorzugte Mengenverhältnis von Polyol : Wasser vorzugsweise zwischen 2 : 1 bis ca. 1 : 40 liegt. An dieser Stelle ist zu erwähnten, dass Versuche mit unverdünntem Glykol gezeigt haben, dass auch reine Polyole eingesetzt werden können, um die Streufähigkeit zu verbessern, wobei es jedoch dann häufig ein Problem ist, eine ideal homogene Vermischung mit den Feststoffpartikeln zu erreichen.

Bei einer vorteilhaften Ausgestaltung der vorliegenden Erfindung enthält die wässrige Beschichtungslösung zusätzlich ein mit Wasser verdünnter Wasserglas, wobei die Wasserglasmenge vorteilhaft 0.001 bis 2.0 Gew.%, bezogen auf das unbehandelte Schleifkorn, beträgt.

Eine weitere vorteilhafte Ausgestaltung sieht vor, dass die Feststoffpartikel vorher mit einem organischen Silan als Haftvermittler behandelt werden. Die Behandlung mit Organosilanen verbessert die Festigkeit der Einbindung der Feststoffpartikel in der Kunstharzmatrix, gleichzeitig verschlechtert diese Behandlung jedoch das Streuverhalten der Feststoffpartikel. Mit einer zusätzlichen Behandlung mit den üblichen hydrophilen oder hygroskopischen Substanzen zur Verbesserung der Streufähigkeit kann diese Verschlechterung wieder aufgehoben werden, wobei jedoch dann die Festigkeit der Einbindung, insbesondere die Nassfestigkeit, wieder leidet. Überraschend wurde nun gefunden, dass das Streuverhalten von Feststoffpartikeln, die zur Verbesserung der Einbindung mit einem Organosilan behandelt wurden, nachhaltig durch eine anschließende Behandlung mit einer wässrigen Polyol-Lösung verbessert werden kann, ohne dass dadurch später die Einbindung leidet. Offensichtlich harmoniert das Polyol mit der Kunstharzbindung bei der abschließenden Vernetzung durch Polykondensation.

Geeignete Silane für die Verbesserung der Einbindung sind Organosilane mit der allgemeinen Summenformel (RO)₃-Si-(CH₂)ₙ-X, wobei R ein organischer Rest ist, ausgewählt aus der Gruppe Methyl, Ethyl, i-Propyl und Methoxymethyl, n eine ganze Zahl zwischen 0 und 12 und X eine funktionelle Gruppe, ausgewählt aus der Gruppe Vinyl, Acryl, Methacryl und/oder Amin.

Bevorzugte Silan für die oben beschriebene Anwendung sind solche ausgewählt aus der Gruppe 3-Aminopropyl-triethoxysilan, Vinyltriethoxysilan, 3-Methacryloxypropyltrimethoxysilan, wobei die Menge an Organosilan, bezogen auf die unbehandelten Feststoffpartikel, bevorzugt 0_{.}01 bis 2.0 Gew.% beträgt und die Haftvermittler ebenfalls vorzugsweise als verdünnte wässrige Lösung eingesetzt werden.

Durch die Oberflächenbehandlung mit einer polyolhaltigen wässrigen Lösung gelingt es, Feststoffpartikel zu erhalten, die sich in den üblichen Streuanlagen zur Herstellung von Schleifmitteln auf Unterlage hervorragend verarbeiten lassen. Da die behandelten Schleifkörner ein hervorragendes Streuverhalten besitzen, kann die Behandlungsmenge gering gehalten werden, so dass Probleme mit der Fließfähigkeit vermieden werden können und eine homogene Verteilung der Schleifkörner auf dem Transportband in die Streuanlage gewährleistet ist. Gleichzeitig wird durch die Oberflächenbehandlung der Feinststaub auf der Oberfläche nachhaltig gebunden, so dass eine Verarbeitung in den üblichen Streuanlagen ohne gesundheitliche Risiken gewährleistet ist. Auf diese Weise kann die Staubkonzentration im Vergleich zur unbehandelten Schleifkörnung um mindestens 80 % gesenkt werden.

Die Verwendung der erfindungsgemäß behandelten Feststoffpartikel ist jedoch nicht auf Schleifmittel beschränkt, sondern Versuche mit Mikrokörnungen mit einem mittleren Korndurchmesser zwischen ca. 3 µm und ca. 60 µm, die in verschleißfesten Oberflächen eingesetzt werden, haben gezeigt, dass derartige Körnungen ebenfalls hervorragend elektrostatisch verarbeitet werden können, wenn sie zuvor einer erfindungsgemäßen Behandlung unterzogen worden sind. Zwar hat sich die elektrostatische Beschichtung von Papieren oder Folien mit verschleißfesten Partikeln noch nicht allgemein durchgesetzt, jedoch ist damit zu rechnen, dass das Verfahren eine immer breitere Anwendung findet.

Im Folgenden wird die vorliegende Erfindung anhand von Beispielen ausführlich erläutert, wobei aus Gründen der Verfügbarkeit entsprechender Messergebnisse ausschließlich die Verwendung in Schleifmitteln beschrieben wird, worin jedoch keine Einschränkung zu sehen ist. So können beispielsweise die Resultate mit den Feinkörnungen ZWSK 180 (mittlerer Korndurchmesser 70 µm) und ZWSK 220 (mittlerer Korndurchmesser ca. 60 µm) (siehe Beispiele 1 bis 5, Vergleichsbeispiele 1 bis 4) problemlos auf die oben angesprochenen Mikrokörnungen übertragen werden, die für verschleißfeste Schichten eingesetzt werden.

### Beispiel 1 (Edelkorund weiß, ZWSK 180)

Eine Tonne Schmelzkorund (Edelkorund weiß, ZWSK 180, Treibacher Schleifmittel AG) wurde in einen Zwangsmischer gegeben und dort unter ständigem Mischen mit 2 l einer 20%igen Lösung von Aminopropyltriethoxysilan in destilliertem Wasser besprüht. Nach der vollständigen Zugabe der Lösung wurde der Mischvorgang etwa 30 Minuten fortgesetzt. Anschließend wurden die so beschichteten Schleifkörner unter weiterem Mischen mit einer Lösung von 500 ml Glyzerin in 1.5 l Wasser besprüht. Auch in diesem Fall wurde nach der Zugabe der Lösung der Mischvorgang etwa 30 Minuten fortgesetzt, so dass ein Gesamtmischvorgang von etwa 1.5 Stunden resultierte. Die so erhaltene Schleifkornmischung wurde dann mit Hilfe eines Bandtrockners bei 80°C getrocknet.

### Vergleichsbeispiel 1 (Edelkorund weiß, ZWSK 180).

Es wurde wiederum eine Tonne Schmelzkorund (Edelkorund weiß, ZWSK 180, Treibacher Schleifmittel AG) eingesetzt. In diesem Falle wurde jedoch nur eine Behandlung mit 2 l einer 20%igen Lösung von 3-Aminopropyltriethoxysilan durchgeführt. Anschließend wurde die so erhaltene Schleifkornmischung wieder mit Hilfe, eines Bandtrockners bei 80 °C getrocknet.

### Beispiel 2 (Edelkorund Weiß, ZWSK 180)

Der Versuch wurde in Analogie zu Beispiel 1 durchgeführt. Es wurde jedoch 3-Methacryloxypropyltrimethoxysilan als Organosilan und Glykol als Polyol eingesetzt.

### Beispiel 3 (Edelkorund Weiß, ZWSK 220)

Der Versuch wurde analog zu Beispiel 1 durchgeführt, wobei ZWSK 180 durch die feinere Körnung ZWSK 220 ersetzt wurde.

### Vergleichsbeispiel 2 (Edelkorund Weiß, ZWSK 220)

Vergleichsbeispiel 2 wurde analog zu Vergleichsbeispiel 1 produziert, wobei anstatt ZWSK 180 die feinere Körnung ZWSK 220 eingesetzt wurde.

### Beispiel 4 (Edelkorund Weiß, ZWSK 220)

Beispiel 4 wurde in Analogie zu Beispiel 2 durchgeführt; auch hier wurde jedoch die feinere Körnung ZWSK 220 eingesetzt.

### Vergleichsbeispiel 3

Es wurden 1 Tonne ZWSK 180 in Analogie zu Beispiel 1 behandelt, jedoch wurde im zweiten Beschichtungsschritt anstatt der Polyolbehandlung eine Standardbehandlung mit 2 l einer 20%igen Wasserglaslösung durchgeführt.

### Vergleichsbeispiel 4

Analog zu Vergleichsbeispiel 3, jedoch wurde 1 Tonne ZWSK 220 eingesetzt.

### Beispiel 5

Analog zu Beispiel 3 wurde 1 Tonne Edelkorund Weiß (Alodur ZWSK 220, Treibacher Schleifmittel) einer Silanbehandlung unterzogen und anschließend mit 4 kg reinem Glykol vermischt.

### Beispiel 6 (Streuversuche)

Die Messung der Streufähigkeit im elektrostatischen Feld wurde mit Hilfe eines einfachen Messgerätes, das aus einer metallischen Grundplatte, der sogenannten Trägerplatte, und einer parallel darüber angeordneten metallischen Deckplatte besteht. Auf der metallischen Grundplatte, die einen Durchmesser von 5 cm aufweist, werden 5 g des zu vermessenden Schleifkorns möglichst homogen verteilt. Zwischen der metallischen Grundplatte und der Deckplatte, die den fünffachen Durchmesser der Grundplatte aufweist, wird dann ein elektrostatisches Feld mit der Stärke von 4.2 kV/cm² durch Anlegen einer Gleichspannung erzeugt. Dabei wird das auf der Trägerplatte liegende Schleifkorn angeregt und es springt gegen die Deckplatte, von wo es zurückprallt, wobei ein Großteil der Schleifkörner aufgrund des unterschiedlichen Größenverhältnisses der beiden Metallplatten und der unterschiedlichen Auftreffwinkel der einzelnen Körner nicht mehr auf die Trägerplatte zurückfallen. Die Anregungsdauer beträgt 5 Sekunden und gemessen wird der auf der Trägerplatte verbliebene Rückstand. Je geringer der Anteil des Rückstands ist, desto besser ist das Streuverhalten des Schleifkorns. Die Resultate der Streuversuche der Beispiele 1 bis 5 sowie der Vergleichsbeispiele 1 bis 4 sind in der folgenden Tabelle 1 zusammengefasst.

**Tabelle 1**

| Schleifkorn | Behandlung | Streufähigkeit = Rückstand (g) | Kornausbruch (%) |
|---|---|---|---|
| Alodur ZWSK 180 | unbehandelt | 1.0 | ca. 40 |
| | Vergleichsbeispiel 1 | 5.0 | ca. 10 |
| | Vergleichsbeispiel 3 | 1.1 | ca. 60 |
| | Beispiel 1 | 1.2 | ca. 15 |
| | Beispiel 2 | 0.9 | ca. 10 |
| Alodur ZWSK 220 | unbehandelt | 1.7 | ca. 50 |
| | Vergleichsbeispiel 2 | 4.9 | ca. 10 |
| | Vergleichsbeispiel 4 | 1.6 | ca. 65 |
| | Beispiel 3 | 1.4 | ca. 20 |
| | Beispiel 4 | 1.1 | ca. 15 |
| | Beispiel 5 | 1.2 | ca. 20 |

Die in der obigen Tabelle aufgeführten Streuergebnisse zeigen, dass eine Behandlung zur Verbesserung der Streufähigkeit bei feinen Körnungen, wie z.B. Korn 180 oder 220, an sich nicht erforderlich ist, da die Körnungen sich aufgrund des geringen Gewichts der Einzelkörner ohne Behandlung bereits hervorragend im elektrostatischen Feld verarbeiten lassen. Um dies zu demonstrieren, wurden zum Vergleich Alodur ZWSK 180 unbehandelt und Alodur ZWSK 220 unbehandelt gemessen, wobei zu sehen ist, dass mindestens ca. 70 bis ca. 80 % der Einzelkörner angeregt wurden. Durch die Behandlung mit Silan zur Verbesserung der Einbindung in der Kunstharzmatrix wird die Streufähigkeit auf nahezu Null herabgesetzt, wie bei den Vergleichsbeispielen 1 und 2 zu erkennen ist. Durch eine anschließende Behandlung mit einer polyolhaltigen wässrigen Lösung kann die Verschlechterung der Streufähigkeit wieder ausgeglichen werden. Die Vergleichsbeispiele 3 und 4 zeigen, dass auch mit einer Standardbehandlung mit Wasserglas zwar die Streufähigkeit wiederhergestellt werden, jedoch zeigt sich bei vergleichenden Schleifversuchen, dass die Einbindung in der Kunstharzmatrix nicht mehr gewährleistet ist.

Dazu wurden mit den in der Tabelle 1 aufgeführten Schleifkörnungen Schleifbänder hergestellt, die in einer wässrigen Lösung von Natronlauge ausgelagert und anschließend getrocknet wurden. Danach wurden mit den so vorbehandelten Bändern Schleifoperationen zum Test der Einbindung durchgeführt, wobei mit mittleren Drücken ein Edelstahl-Vollmaterial bearbeitet wurde. Die entsprechenden Schleifbänder wurden nach dem Schleifeinsatz einer mikroskopischen Auswertung unterzogen und der prozentuale Flächenanteil des beim Schleifen eingesetzten Bereiches des Schleifbandes ohne Kornausbruch wurde festgehalten. Die oben geschilderten drastischen Bedingungen der Auslagerung in Natronlauge wurden gewählt, um die Unterschiede in der Festigkeit der Einbindung und vor allem in der Nassfestigkeit stärker herauszuarbeiten.

Die Vergleichsbeispiele 1 und 2 zeigten zwar eine gute Einbindung, jedoch ließ sich das silanisierte Schleifkorn elektrostatisch nur sehr schwierig verarbeiten, was zur Folge hatte, dass die entsprechenden Schleifbänder äußerst inhomogen aufgebaut waren und unter Praxisbedingungen als Ausschuss bewertet worden wären.

Das Beispiel 5 zeigt eine gute Streufähigkeit und eine gute Einbindung, jedoch muss in diesem Fall eine relativ große Menge an Polyol eingesetzt werden, um eine akzeptable Durchmischung zu erhalten.

### Beispiel 7 (Versuchsreihe Zirkonkorund)

Es wurde jeweils 1 Tonne Zirkonkorund (Alodur ZK40, Treibacher Schleifmittel AG) in unterschiedlichen Körnungen (P24 und P40) in einem Intensivmischer unter ständigem Mischen mit unterschiedlichen Lösungen behandelt. Dabei wurden die Standardbehandlung zur Verbesserung der Streufähigkeit mit einer reinen Wasser-glaslösung (1.5 l Wasser + 500 ml 40%iges Wasserglas), eine erfindungsgemäße Mischung mit Wasserglas und Glyzerin (1.5 l Wasser + 250 ml 40%iges Wasserglas + 250 ml Glyzerin), eine erfindungsgemäße Mischung mit Wasserglas und Glykol (1.5 l Wasser + 250 ml 40%iges Wasserglas + 250 ml Glykol) sowie eine wässrige Glykollösung (1.5 l Wasser + 500 ml Glykol) als Behandlungslösungen eingesetzt.

Zu diesen Versuchen ist anzumerken, dass die Festigkeit der Einbindung der groben, eine zerklüftete Oberfläche aufweisenden Körnungen nicht das primäre Problem ist, sondern die vor allem die Streufähigkeit selber und die dabei auftretende Staubentwicklung.

Untersucht wurden die behandelten Schleifkörner daher in Bezug auf den Staubindex, sowie die Streufähigkeit.

### Messung der Streufähigkeit

Die Messung der Streufähigkeit für die gröberen Körnungen im elektrostatischen Feld erfolgte mit Hilfe eines Messgerätes, das aus einer metallischen Grundplatte als Anode und einer parallel dazu angeordneten, höhenverstellbaren Metallplatte als Kathode besteht. Die Kathode ist mit einer Saugvorrichtung zur rückseitigen Fixierung einer beleimten Unterlage mit einer definierten Grundfläche ausgerüstet. Die Menge der beim Einschalten einer Gleichspannung in einer Zeiteinheit auf der beleimten Unterlage festklebenden Schleifkörner wird durch Auswiegen der Unterlage bestimmt und die Streufähigkeit wird dann als Streudichte (g/m²) ausgedrückt.

### Bestimmung des Staubindexes

Das Messverfahren zur Bestimmung des Staubgehaltes von Pulvern oder Granulaten basiert auf dem Prinzip der Lichtabschwächung. Dabei wird die Probe über ein Fallrohr in das Messsystem gegeben und die sich dabei zwischen Lichtquelle (Laser) und Detektor entwickelnde Staubwolke wird über die Lichtabschwächung, die im direkten Verhältnis zur Staubkonzentration steht, vermessen und als Staubindex berechnet. Zur Staubmessung wurde ein Messgerät der Fa. Anatec Deutschland GmbH mit der Bezeichnung DustMon L eingesetzt. Die Messdauer betrug 30 Sekunden, wobei jeweils 100g Proben vermessen wurden. Bestimmt wurde der Staubindex, der sich aus der Summe des Maximalwertes zu Beginn der Messung und des Endwertes vor dem Abbruch der Messung ergibt.

**Tabelle 2**

| Schleifkorn | Nr. | Behandlung | Streudichte (g/m²) | Staubindex |
|---|---|---|---|---|
| Alodur ZK40 P24 | 7.1 | unbehandelt | 117 | 12.43 |
| | 7.2 | Standard | 304 | 4.988 |
| | 7.3 | Glycerin / Wasserglas | 617 | 0.32 |
| | 7.4 | Glykol / Wasserglas | 598 | 0.52 |
| | 7.5 | Glykol | 458 | 0.28 |
| Alodur ZK40 P40 | 7.6 | unbehandelt | 64 | 22.94 |
| | 7.7 | Standard | 228 | 5.43 |
| | 7.8 | Glycerin / Wasserglas | 445 | 0.35 |
| | 7.9 | Glykol / Wasserglas | 414 | 0.43 |
| | 7.10 | Glykol | 322 | 0.29 |

Es wurden alle gängigen Korngrößen für Zirkonkorund von P24 bis P120 untersucht, wobei festgestellt wurde, dass sich sämtliche Körnungen prinzipiell gleich verhalten, so dass die Körnungen P24 und P40 stellvertretend als Beispiele ausgewählt werden konnten. Bei den Messungen wurden für gleiche Korngrößen jeweils gleiche Streubedingungen (Spannung, Abstand, Anregungszeit) eingehalten.

Die in der Tabelle 2 aufgeführten Ergebnisse zeigen, dass unbehandelte Zirkonkorund-Schleifkörner (Nr. 7.1 und 7.6) ein schwaches Streuverhalten zusammen mit einer hohen Staubentwicklung aufweisen. Mit einer Standardbehandlung unter Verwendung einer Wasserglaslösung (Nr. 7.2 und 7.7) kann die Streudichte mehr als verdoppelt werden und auch die Staubentwicklung wird bereits deutlich reduziert. Allerdings bedeutet ein Staubindex von ca. 5 in der Praxis immer noch eine starke Belastung für die Kontaktpersonen. Völlig überraschend ist jedoch die nochmalige Verdopplung der Streudichte mit der erfindungsgemäßen polyol- und wasserglashaltigen Behandlung (Nr. 7.3, 7.4, 7.8 und 7.9). In allen Fällen der erfindungsgemäßen Behandlung wird die Staubentwicklung auf einen Staubindex unter 1 gedrückt, was in der Praxis bedeutet, dass ein nahezu staubfreies Arbeiten möglich ist. Interessant ist, dass die Behandlung mit einem Polyol (Gykol) ohne zusätzliches Wasserglas (Nr. 7.5 und 7.10) zwar in Bezug auf das Streuverhalten etwas schlechter abschneidet. Möglicherweise ist in diesem Fall jedoch die Einbindung in der Matrix besser, was jedoch im Rahmen der Versuche nicht geprüft wurde.

Anhand der Figuren 1 bis 3 ist die Auswirkung der erfindungsgemäßen Behandlung auf das Streuverhalten optisch dargestellt. Dabei zeigen
- Figur 1: optische (fotographische) Auswertung eines Streuversuches mit einem unbehandelten Schleifkorn,
- Figur 2: optische (fotographische) Auswertung eines Streuversuches mit einem standardmäßig behandelten Schleifkorn und
- Figur 3: optische (fotographische) Auswertung eines Streuversuches mit einem erfindungsmäßig behandelten Schleifkorn

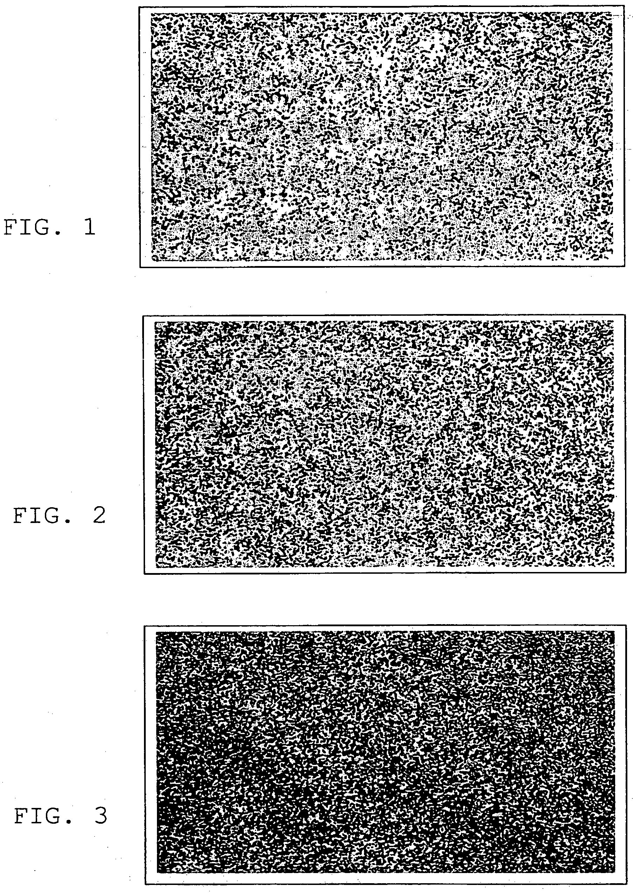

Die Figur 1 ist eine fotographische Abbildung einer bei einem Streuversuch mit unbehandelten Zirkonkorund-Schleifkörnern (Alodur ZK 40 P24) verwendeten beleimten Unterlage nach dem Streuversuch im elektrostatischen Feld und entspricht damit dem Versuch Nr. 7.1. Das Streubild ist sehr offen und genügt nicht den üblichen Produktionsanforderungen für derartige Schleifbänder.

Figur 2 zeigt das Streubild von Zirkonkorund-Schleifkörnern mit einer Standardbehandlung und entspricht damit dem Versuch Nr. 7.2. die höhere Streudichte im Vergleich zum unbehandelten Schleifkorn ist optisch deutlich zu erkennen.

In der Figur 3 ist das Streubild von Zirkonkorund-Schleifkörnern zu sehen, die einer erfindungsgemäßen Behandlung gemäß Versuch 7.3 unterzogen wurden. Es ist eine außerordentlich dichte Belegung der Unterlage mit Feststoffpartikeln zu erkennen. Mit einer derart guten Streufähigkeit, verbunden mit einer nahezu vollständigen Unterdrückung der Staubentwicklung, kann das erfindungsgemäße Schleifkorn auf ideale Weise im elektrostatischen Feld verarbeitet werden, was insbesondere für den Hersteller von entsprechenden Schleifmitteln auf Unterlage enorme Produktionsvorteile mit sich bringt.

Im Rahmen der oben beschriebenen Erfindung wurde eine Vielzahl weiterer Versuche durchgeführt, bei denen insbesondere die Konzentrationen der wässrigen Lösungen und die Behandlungsmengen an Polyol bzw. Wasserglas in den in der Beschreibung angegebenen Bereichen variiert wurden. Diese Versuche, die hier nicht explizit aufgeführt werden, haben vor allem gezeigt, dass die Konzentrationen in einem breiten Bereich variiert werden können, ohne dass dabei der im Vergleich zum Stand der Technik beschriebene positive Effekt in Bezug auf Streufähigkeit und Staubentwicklung verlorengeht.

## Patentansprüche

1. Fließfähiges Feststoffpartikel für die Verarbeitung im elektrostatischen Feld aus der Gruppe Korund, Schmelzkorund, Sinterkorund, Zirkonkorund, Siliziumcarbid, Borcarbid, kubisches Bornitrid, Diamant und/oder Gemische davon, die eine Oberflächenbehandlung in Form einer physikalisch aufgetragenen Beschichtung aufweisen, wobei die Beschichtung mindestens ein Polyol umfasst, **dadurch gekennzeichnet, dass** die Menge an Polyol 0,001 bis 1,0 Gew.-%, bezogen auf die unbehandelten Feststoffpartikel, beträgt, wobei das Polyol ein lineares Polyol mit 2 bis 6 Kohlenstoffatomen ist.

2. Feststoffpartikel nach Anspruch 1, **dadurch gekennzeichnet, dass** das Polyol ausgewählt ist aus der Gruppe Glykol, Propandiol, Butandiol und Glycerin.

3. Feststoffpartikel nach Anspruch 1 oder 2, **dadurch gekennzeichnet, dass** die Beschichtung zusätzlich Wasserglas umfasst.

4. Feststoffpartikel nach Anspruch 3, **dadurch gekennzeichnet, dass** die Menge an Wasserglas, bezogen auf die unbehandelten Feststoffpartikel, 0,001 bis 2,0 Gew.-% beträgt.

5. Feststoffpartikel nach Anspruch 1 oder 2, **dadurch gekennzeichnet, dass** die Beschichtung zusätzlich ein Silan mit der allgemeinen Summenformel (RO)₃-Si-(CH₂)ₙ-X umfasst, wobei R ein organischer Rest ist, ausgewählt aus der Gruppe Methyl, Ethyl, i-Propyl und Methoxymethyl, n eine ganze Zahl zwischen 0 und 12 und X eine funktionelle Gruppe ist, ausgewählt aus der Gruppe Vinyl, Acryl, Methacryl und/oder Amin ist.

6. Feststoffpartikel nach Anspruch 5, **dadurch gekennzeichnet, dass** das Silan ausgewählt ist aus der Gruppe 3-Aminopropyltriethoxysilan, Vinyltriethoxysilan, 3-Methacryloxypropyltrimethoxysilan.

7. Feststoffpartikel nach Anspruch 5 oder 6, **dadurch gekennzeichnet, dass** die Menge an Organosilan, bezogen auf die unbehandelten Feststoffpartikel, 0,01 bis 2,0 Gew.-% beträgt.

8. Verfahren zur Herstellung von Feststoffpartikeln nach einem der Ansprüche 1 bis 7, **dadurch gekennzeichnet, dass** die Feststoffpartikel in einem Intensivmischer vorgelegt und anschließend unter ständigem Mischen mit einer wässrigen Lösung eines Polyols besprüht werden.

9. Verfahren nach Anspruch 8, **dadurch gekennzeichnet, dass** das Mengenverhältnis Polyol : Wasser 2:1 bis 1:40 beträgt.

10. Verfahren nach Anspruch 8 oder 9, **dadurch gekennzeichnet, dass** die wässrige Lösung des Polyols zwischen 0,001 bis 2,0 Gew.-% Wasserglas, bezogen auf die unbehandelten Feststoffpartikel, umfasst.

11. Verfahren nach Anspruch 8 oder 9, **dadurch gekennzeichnet, dass** die Feststoffpartikel vor der Behandlung mit der wässrigen Lösung des Polyols einer Behandlung mit 0,01 bis 2,0. Gew.-% Organosilan unterzogen werden.

12. Verwendung der Feststoffpartikel nach einem der Ansprüche 1 bis 7 für die Herstellung von Schleifmitteln auf Unterlage.

## Claims

1. Pourable solid particle for treatment in the electrostatic field, from the group corundum, melted corundum, sintered corundum, zirconium corundum, silicon carbide, boron carbide, cubic boron nitride, diamond and/or mixtures thereof, which have a surface treatment in the form of a physically applied coating, wherein the coating comprises at least one polyol, **characterised in that** the amount of polyol is 0.001 to 1.0 wt.-%, relative to the untreated solid particles, wherein the polyol is a linear polyol with 2 to 6 carbon atoms.

2. Solid particle according to claim 1, **characterised in that** the polyol is selected from the group glycol, propane diol, butane diol, and glycerol.

3. Solid particle according to claim 1 or 2, **characterised in that** the coating additionally comprises waterglass.

4. Solid particle according to claim 3, **characterised in that** the amount of waterglass relative to the untreated solid particles is 0.001 to 2.0 wt.-%.

5. Solid particle according to claim 1 or 2, **characterised in that** the coating additionally comprises a silane with the general empirical formula (RO)₃-Si-(CH₂)ₙ-X, wherein R is an organic radical selected from the group methyl, ethyl, i-propyl and methoxymethyl, n is an integer between 0 and 12, and X is a functional group selected from the group vinyl, acryl, methacryl and/or amine.

6. Solid particle according to claim 5, **characterised in that** the silane is selected from the group 3-aminopropyltriethoxysilane, vinyltriethoxysilane, 3-methacryloxypropyltrimethoxysilane.

7. Solid particle according to claim 5 or 6, **characterised in that** the amount of organosilane relative to the untreated solid particles is 0.01 to 2.0 wt.-%.

8. Method for the production of solid particles of any one of claims 1 to 7, **characterised in that** the solid particles are provided in an intensive mixer and subsequently sprayed with an aqueous solution of a polyol under constant mixing.

9. Method according to claim 8, **characterised in that** the ratio of polyol to water is 2:1 to 1:40.

10. Method according to claim 8 or 9, **characterised in that** the aqueous solution of the polyol comprises between 0.001 to 2.0 wt.-% waterglass, relative to the untreated solid particles.

11. Method according to claim 8 or 9, **characterised in that** the solid particles undergo a treatment with 0.01 to 2.0 wt.-% organosilane prior to the treatment with the aqueous solution of the polyol.

12. Use of the solid particles of any one of claims 1 to 7 for the production of grinding materials on a support.

## Revendications

1. Solide à écoulement libre pour traitement dans un champ électrostatique provenant du groupe corindon, alumine fondue, corindon fritté, corindon zirconien, carbure de silicium, carbure de bore, nitrure de bore cubique, diamant et/ou alliages de ceux-ci qui présentent un traitement de surface sous la forme d'un revêtement apposé physiquement, le revêtement comprenant au moins un polyol **caractérisé par le fait que** la quantité de polyol atteigne entre 0,001 et 1,0 % du poids par rapport au solide non traité et si le polyol est un polyol linéaire comptant entre 2 et 6 atomes de carbone.

2. Solide selon la revendication 1 **caractérisé par le fait que** le polyol sélectionné provienne du groupe glycol, propanediol, butanediol et glycérine.

3. Solide selon les revendications 1 ou 2 **caractérisé par le fait que** le revêtement comprenne en outre du verre.

4. Solide selon la revendication 3 **caractérisé par le fait que** la quantité en verre en proportion du solide non traité atteigne entre 0,001 et 2,0 % du poids.

5. Solide selon les revendications 1 ou 2 **caractérisé par le fait que** le revêtement comprenne en outre un silane avec la formule brute générale (RO)₃-Si-(CH₂)ₙ-X où R est un reste organique sélectionné à partir du groupe méthyle, éthyle, i-propyle et méthoxyméthyle, n étant un entier compris entre 0 et 12 et X un groupe fonctionnel, sélectionné à partir du groupe vinyle, acryle, méthacryle et/ou amine.

6. Solide selon la revendication 5 **caractérisé par le fait que** le silane sélectionné provienne du groupe 3-aminopropyletrithoxysilane, vinyltrithoxysilane, 3-méthacryloxypropyltriméthoxysilane.

7. Solide selon les revendications 5 ou 6 **caractérisé par le fait que** la quantité en organosilane en proportion du solide non traité atteigne entre 0,01 et 2,0 % du poids.

8. Processus de fabrication de solides selon l'une des revendications 1 à 7 **caractérisé par le fait que** le solide soit passé dans un mélangeur intensif et ensuite vaporisé en mélange constant avec une solution aqueuse d'un polyol.

9. Processus selon la revendication 8 **caractérisé par le fait que** le ratio de quantité polyol:eau atteigne 2:1 à 1:40.

10. Procédure selon les revendications 8 ou 9 **caractérisée par le fait que** la solution aqueuse du polyol atteigne entre 0,001 et 2,0 % en poids de verre par rapport au solide non traité.

11. Procédure selon les revendications 8 ou 9 **caractérisée par le fait que** le solide soit soumis à un traitement d'organosilane à hauteur de 0,01 à 2,0 % en poids avant le traitement à la solution aqueuse de polyol.

12. Utilisation de solide selon l'une des revendications 1 à 7 pour la fabrication d'abrasifs sur le support.
